# EUROPÄISCHE PATENTSCHRIFT

(11) **EP 3 074 473 B1**
(45) Veröffentlichungstag und Bekanntmachung des Hinweises auf die Patenterteilung: **26.12.2018**
(21) Anmeldenummer: 14802318.7
(22) Anmeldetag: 07.11.2014
(51) Int. Cl.: C09D 13/00

(54) **MINE FÜR SCHREIB-, ZEICHEN- UND/ODER MALGERÄTE SOWIE VERFAHREN ZUR DEREN HERSTELLUNG**
LEAD REFILL FOR WRITING, DRAWING AND/OR PAINTING DEVICES AND METHOD FOR THE PRODUCTION THEREOF
MINE POUR INSTRUMENT D'ÉCRITURE, DE DESSIN ET/OU DE PEINTURE ET PROCÉDÉ POUR SA FABRICATION

(30) Priorität: 29.11.2013 DE 102013020666
(43) Veröffentlichungstag der Anmeldung: 05.10.2016
(73) Patentinhaber: STAEDTLER Mars GmbH & Co. KG, 90427 Nürnberg (DE)
(72) Erfinder: HERBOLSHEIMER, Johannes, 91619 Obernzenn (DE)
(86) Internationale Anmeldenummer: PCT/EP2014/002990
(87) Internationale Veröffentlichungsnummer: WO 2015/078556

(56) Entgegenhaltungen:
- EP-A1- 1 302 516
- EP-A1- 2 055 733
- EP-A2- 0 597 328
- EP-A2- 1 826 253
- DE-A1- 4 230 792
- DE-A1-102004 051 618
- US-A- 3 704 071
- US-A1- 2002 139 278

## Beschreibung

Die Erfindung betrifft Minen für Schreib-, Zeichen- und/oder Malgeräte auf Basis von polymeren Bindemitteln, sowie ein Verfahren zu deren Herstellung.

Polymergebundene Minen auf Basis von rohölabgeleiteten Polymeren zum Zeichnen, Schreiben und/oder Malen sind prinzipiell bekannt.

Unter polymergebundenen Minen auf Farb- und Graphitbasis zum Schreiben, Zeichnen und/oder Malen versteht man einerseits Minen, die fest in Holz oder andere spitzbare Materialien eingebracht werden und andererseits Minen, die verschiebbar in einer biegesteifen Hülle gelagert sind. Beispiele hierfür sind holzgefasste Bleistifte und Minen für mechanische Stifte, beispielweise so genannte Druckbleistifte oder Fallstifte. Dabei weisen die Minen üblicherweise Außendurchmesser im Bereich von etwa 0,3 mm bis 6 mm auf. Weiter sind unter derartigen Minen auch sogenannte Vollminenstifte umfasst, welche als Mine ohne Umhüllung vorliegen.

So sind beispielweise polymergebundene Farb- und Graphitminen aus der
WO 2010/006742 A1 bekannt. Derartige Minen enthalten ein polymeres Bindemittel, Wachs, Palmöl und Füllstoffe.
Durch den Zusatz von Wachs in derartigen Minen werden zum einen die Schreibeigenschaften beeinflusst und zum anderen der Extrusionsdruck bei der Minenherstellung reduziert.
Nachteilig bei derartigen Minen ist, dass durch den Zusatz von Wachs die spezifische Festigkeit der Minen negativ beeinflusst wird. Es hat sich gezeigt, dass mit steigendem Wachsgehalt die spezifische Festigkeit stetig abnimmt.
Es kann davon ausgegangen werden, dass die Wachse die Benetzung der Füllstoffe innerhalb der Kunststoffmatrix negativ beeinflussen.

**Aufgabe** der Erfindung ist es daher, eine Mine zum Schreiben, Zeichnen und/oder Malen zu schaffen, die die genannten Nachteile nicht aufweist und die insbesondere unter dem vorhanden sein von Wachsen eine hohe spezifische Festigkeit aufweist.

Weiter ist es Aufgabe der Erfindung ein Verfahren zur Herstellung derartiger Minen bereit zu stellen.

Diese Aufgabe wird durch die Zugabe von Tensiden zur Minenmasse gelöst. Damit wurde eine polymergebundene Mine für Schreib, Zeichen und/oder Malgeräte, insbesondere für Blei- und/oder Farbstifte geschaffen, welche mindestens ein polymeres Bindemittel, mindestens ein Wachs, mindestens ein Farbmittel, mindestens einen Füllstoff und mindestens ein Tensid als Netzmittel umfasst.

Das Tensid, als ein Netzmittel bzw. oberflächenaktive Substanz verbessert die Benetzung der Füllstoffe durch die Kunststoffschmelze, indem die Polaritätsunterschiede zwischen den einzelnen Komponenten der Mischung herabgesetzt werden, wodurch sich ein stabileres Gefüge ausbildet und damit die spezifische Festigkeit steigt.

Es hat sich in überraschender Weise herausgestellt, dass durch die Zugabe von mindestens einem Tensid zur Minenmasse, die damit hergestellten Minen eine Festigkeitssteigerung erfahren, welche bis zu 15 % beträgt.
Zudem hat es sich in überraschender Weise gezeigt, dass die Abstriche, welche mit der erfindungsgemäßen Mine erzeugt werden, eine gute Gleitfähigkeit sowie eine gute Radierbarkeit aufweisen.
Diese überraschenden Effekte konnten sowohl bei Blei- als auch Farbminen festgestellt werden.

Der Anteil des mindestens einen Tensides an der Minenzusammensetzung liegt im Bereich größer null bis 6 Gew.-%, bevorzugt in einem Bereich von 0,2 bis 3 Gew.-%.

Das Tensid kann als kationisches, anionisches und/oder nichtionisches Tensid vorliegen.
Beispiele für ein nichtionisches Tensid sind Tenside aus der Gruppe der Fettsäureester.
Kationische Tenside können beispielsweise als Ammoniumverbindungen vorliegen. Beispielhaft für anionische Tenside sei Natrium-Alkyl-Sulfonat genannt.

Es hat sich bewährt, wenn das mindestens eine Tensid mindestens eines aus der Gruppe der Fettsäureester und/oder quartären Ammoniumverbindungen umfasst.

Es hat sich als vorteilhaft erwiesen, wenn die **polymergebundene Mine**

| | |
|---|---|
| 10 bis 40 Gew.-% | polymeres Bindemittel |
| mehr als null bis 6 Gew.-% | Tensid |
| 2 bis 25 Gew.-% | Wachs und/oder Öle |
| 0 bis 30 Gew.-% | Farbmittel |
| Rest | Füllstoffe |

aufweist.

Insbesondere ist es bevorzugt, wenn die **polymergebundene Mine**

| | |
|---|---|
| 12 bis 30 Gew.-% | polymeres Bindemittel |
| 0,2 bis 3 Gew.-% | Tensid |
| 4 bis 20 Gew.-% | Wachs und/oder Öle |
| Rest | Füllstoffe |

aufweist.

Bei der polymergebundenen Mine handelt es sich um eine Bleimine

Vorteilhafter Weise ist der mindestens eine Füllstoff aus mindestens einem Füllstoff der Gruppen umfassend Graphit, hexagonales Bornitrid, Schichtsilikate, Kreide, Schwerspat, bunte Pigmente und/oder unbunte Pigmente ausgewählt.
Für Bleistiftminen ist dabei insbesondere Graphit oder Graphit in Kombination mit Ruß als Füllstoff bzw. farbgebender Füllstoff bevorzugt.

Eine bevorzugte Zusammensetzung für eine **Bleistiftmine** umfasst:

| | |
|---|---|
| 12 bis 30 Gew.-% | polymeres Bindemittel |
| 0,2 bis 3 Gew.-% | Tensid |
| 2 bis 20 Gew.-% | Wachs und/oder Öl |
| Rest | Graphit oder Graphit und Ruß |

### Beispielrezeptur 1 für eine Bleistiftmine umfasst:

| | |
|---|---|
| Styrolacrylnitril (SAN) | 20 Gew.-% |
| POE fatty ammonium ethosulphate | 1 Gew.-% |
| Calciumstearat | 8 Gew.-% |
| Palmöl | 1 Gew.-% |
| Graphit | 66 Gew.-% |
| Ruß | 4 Gew. -% |

### Beispielrezeptur 2 für eine Bleistiftmine umfasst:

| | |
|---|---|
| Polystyrol (PS) | 18 Gew.-% |
| POE fatty ammonium ethosulphate | 1 Gew.-% |
| Fatty alcohol polyglycol ether | 1 Gew.-% |
| Graphit | 69 Gew.-% |
| Aluminiumstearat | 11 Gew.-% |

Als Farbmittel für Bleistiftminen wird wie in den Beispielen dargestellt Graphit eingesetzt. Ebenso kann jedoch auch eine Kombination von Graphit und Ruß eingesetzt werden.

Das mindestens eine polymere Bindemittel ist aus mindestens einem Polymer der Gruppe umfassend Polystyrol (PS), Styrol/Acrylnitril (SAN), Polylactid (PLA), Styrol/Butadien (SB), Polyolefine (PO) und Acrylnitril/Butadien/Styrol (ABS) gebildet. Als das mindestens eine Wachs, können mindestens ein Wachs aus der Gruppe umfassend Fettsäuren, Stearate, Montanwachse, Amidwachse und Paraffine Verwendung finden.

In der nachfolgenden Tabelle wurden die Biegebruchfestigkeiten von Minen mit und ohne Tensidgehalt gegenübergestellt. Als Minenmasse wurde eine Masse gemäß Beispielrezeptur 2 (Bleistiftmine) herangezogen, wobei für den Vergleich in der Masse gemäß Beispielrezeptur 2 das Tensid bzw. das Tensidgemisch weggelassen wurde.

| | Mine mit Tensidanteil | Mine ohne Tensidanteil |
|---|---|---|
| Biegebruchfestigkeit (MPa) | 52,8 | 45,3 |

Aus der Tabelle ist eindeutig zu erkennen, dass eine Mine, welche mindestens ein Tensid aufweist, eine Festigkeitssteigerung von etwa 15 % gegenüber Minen ohne Tensid gemessen werden kann.

Die Messung erfolgt in einem 3-Punkt-Biegeversuch in Anlehnung an die DIN 52186, bei welchem zylindrische Prüfkörper/Minen mit einem Durchmesser von 3 mm und einer Länge von 170 mm der Prüfung unterzogen wurden. Der Prüfkörper wird hierbei auf beweglichen Rollen mit einer Stützweite von 50 mm gelagert. Die Krafteinleitung erfolgt über einen Prüfstempel. Rollen und Prüfstempel weisen einen Radius von 2 mm auf.

Als Verfahren zur Herstellung einer erfindungsgemäßen polymergebundenen Mine hat sich das Verfahren der Extrusion bewährt.

Die erfindungsgemäße Mine wird insbesondere unter Durchführung nachfolgend ausgeführter Schritte hergestellt:
- Mischen und Granulieren aller Rezepturkomponenten der Mine zu einem Minengranulat
- Extrudieren des Minengranulates bei einer Temperatur im Bereich von 120 bis 200°C auf einem Extruder durch ein geeignetes Mundstück zu endlosen Minensträngen
- Kühlen und Verfestigen des endlosen Minenstranges, und
- Schneiden des endlosen Minenstranges auf Endlänge, insbesondere auf die benötigte Stiftlänge

Je nach Extrusionskopf kann der Minenquerschnitt beliebige Formen annehmen - rund, eckig oder Kombinationen daraus. Des Weiteren besteht die Möglichkeit über eine Mehrfach-Coextrusion verschiedene Minenrezepturen in einem Extrusionskopf zu einer mehrkomponentigen Mine zu verbinden.

Darüber hinaus kann das Minengranulat mittels geeigneter Coextrusionsverfahren mit anderen polymergebundenen Materialien zu einem kompletten Stift extrudiert werden.

## Patentansprüche

1. **Polymergebundene Bleistiftmine** für Schreib, Zeichen und/oder Malgeräte, umfassend m2indestens ein polymeres Bindemittel, mindestens ein Wachs- und/oder Ölanteil, mindestens ein Farbmittel und mindestens einen Füllstoff,
**dadurch gekennzeichnet,**
**dass** die Mine mindestens ein Tensid aufweist,
**dass** das mindestens eine Tensid aus der Gruppe der Fettsäureester und/oder quartären Ammoniumverbindungen ausgewählt ist,
**dass** das mindestens eine polymere Bindemittel aus mindestens einem Polymer der Gruppe umfassend Polystyrol (PS), Styrol/Acrylnitril (SAN), Polylactid (PLA), Styrol/Butadien (SB), Polyolefine (PO) und Acrylnitril/Butadien/Styrol (ABS) gebildet ist **und dass** die Mine
| | |
|---|---|
| 12 bis 30 Gew.-% | polymeres Bindemittel |
| 0,2 bis 3 Gew.-% | Tensid |
| 2 bis 20 Gew.-% | Wachs und/oder Öl |
| Rest | Graphit oder Graphit und Ruß |
aufweist.

2. **Mine** nach Anspruch 1,
**dadurch gekennzeichnet,**
**dass** das mindestens eine Tensid als ein anionisches, kationisches und/oder nichtionisches Tensid vorliegt.

3. **Verfahren zur Herstellung einer polymergebundenen Mine** nach Anspruch 1, **dadurch gekennzeichnet,**
**dass** die Mine durch Extrusion gebildet wird.

## Claims

1. Polymer-bound core for writing, drawing or colouring instruments comprising at least one polymer binder, at least one wax component and/or oil component, at least one colorant and at least one filler,
**characterised in that**
the core comprises at least one surfactant,
the at least one surfactant is selected from the group of fatty acid esters and/or quaternary ammonium compounds,
the at least one polymer binder is formed from at least one polymer of the group comprising polystyrol (PS), styrol/acrylnitrile (SAN), polylactide (PLA), styrol/butadiene (SB), polyolefines (PO) and acrylnitrile/butadiene/styrol (ABS)
and the core comprises
| | |
|---|---|
| 12 to 30 weight % | polymer binder |
| 0.2 to 3 weight % | surfactant |
| 2 to 20 weight % | wax and/or oil |
| remainder | graphite or graphite and carbon black |

2. Core according to claim 1, **characterised in that** the at least one surfactant is present as an anionic, cationic and/or non-ionic surfactant.

3. Method of producing a polymer-bound core according to claim 1, **characterised in that** the core is formed by extrusion.

## Revendications

1. Mine de crayon liée par polymère pour des instruments d'écriture, de dessin et/ou de peinture, comprenant au moins un liant polymère, au moins une part de cire et/ou d'huile, au moins un colorant et au moins une matière de remplissage, **caractérisée**
**en ce que** la mine présente au moins un agent tensioactif,
**en ce que** l'agent tensioactif au moins unique est choisi dans le groupe des esters d'acides gras et/ou des ammoniums quaternaires,
**en ce que** le liant polymère au moins unique est formé à partir d'au moins un polymère du groupe comprenant le polystyrène (PS), le styrène-acrylonitrile (SAN), le polylactide (PLA), le styrène-butadiène (SB), les polyoléfines (PO) et l'acrylonitrile-butadiène-styrène (ABS),
et **en ce que** la mine présente
| | |
|---|---|
| 12 à 30 % en poids | de liant polymère |
| 0,2 à 3 % en poids | d'agent tensioactif |
| 2 à 20 % en poids | de cire et/ou d'huile |
| et le reste | de graphite ou de graphite et de noir de carbone. |

2. Mine selon la revendication 1, **caractérisée en ce que** l'agent tensioactif au moins unique est présent sous la forme d'un agent tensioactif anionique, cationique et/ou non ionique.

3. Procédé de fabrication d'une mine liée par polymère selon la revendication 1, **caractérisé en ce que** la mine est formée par extrusion.
